# EUROPÄISCHE PATENTSCHRIFT

(11) **EP 3 507 131 B1**
(45) Veröffentlichungstag und Bekanntmachung des Hinweises auf die Patenterteilung: **18.08.2021**
(21) Anmeldenummer: 17764315.2
(22) Anmeldetag: 18.08.2017
(51) Int. Cl.: B60L 50/50, B62H 5/00, B60L 53/16, B60L 53/18, B60L 53/34, B62H 5/14, B62H 5/20, B62M 6/90

(54) **LADE- UND ABSPERRVORRICHTUNG FÜR ELEKTROFAHRZEUGE**
CHARGING AND SHUT-OFF DEVICE FOR ELECTRIC VEHICLES
DISPOSITIF DE CHARGE ET DE VERROUILLAGE POUR VÉHICULES ÉLECTRIQUES

(30) Priorität: 31.08.2016 AT 507732016
(43) Veröffentlichungstag der Anmeldung: 10.07.2019
(73) Patentinhaber: Schitter, Volkmar, 5400 Hallein (AT); Schitter, Eckhard, 5400 Hallein (AT); Stranger, Rupert, 5541 Altenmarkt im Pongau (AT)
(72) Erfinder: Schitter, Volkmar, 5400 Hallein (AT); Schitter, Eckhard, 5400 Hallein (AT); Stranger, Rupert, 5541 Altenmarkt im Pongau (AT)
(74) Vertreter: Babeluk, Michael
(86) Internationale Anmeldenummer: PCT/AT2017/060203
(87) Internationale Veröffentlichungsnummer: WO 2018/039691

(56) Entgegenhaltungen:
- EP-A1- 2 614 980
- DE-A1-102011 011 461
- DE-A1-102012 025 083
- DE-A1-102015 002 486
- DE-A1-102015 002 487

## Beschreibung

Die Erfindung betrifft eine Lade- und Absperrvorrichtung geeignet für Elektrofahrzeuge, vorzugsweise Elektrofahrräder, mit einem Rahmen und einem am oder im Rahmen angeordneten Akku, mit einem Ladekabel zum Aufladen des Akkus an einer Ladestation, wobei das Ladekabel zumindest teilweise mit einem Sicherungselement, beispielsweise einem Seil, einem Metallgewebeschlauch oder einer Kette, verstärkt ist. Das Ladekabel weist einen an einer Ladebuchse der Ladestation mittels eines Verriegelungselements abperrbar ansteckbaren Verriegelungs-Ladestecker und einen mit dem Akku elektrisch verbindbaren Akkustecker auf, wobei ein mit dem Sicherungselement verstärkter Abschnitt des Ladekabels als Ladesperrseil ausgeführt ist, das an einem Ende den Verriegelungs-Ladestecker und am anderen Ende zumindest ein Fixierungselement, in Form eines Fixierungsringes oder eine Fixierungsschlaufe aufweist, mit deren oder dessen Hilfe das Ladesperrseil am Rahmen des Elektrofahrzeugs festlegbar ist, wobei aus dem Ladesperrseil ein Ladekabelabschnitt herausgeführt ist, der zum Akkustecker führt.

In diesem Zusammenhang ist aus der EP 2 583 859 A2 ein Ladekabel zur Herstellung einer elektrischen Verbindung zwischen einer Ladestation im öffentlichen Bereich und dem Akku eines Elektrofahrzeuges, beispielsweise eines Elektrofahrrads, bekannt geworden. Um die Ladestation möglichst vielen Benutzern von Fahrrädern mit unterschiedlichen Akkus zugänglich zu machen, weist jedes Ladekabel den für den jeweiligen Akku passenden Akkustecker, sowie einen Steckverbinder zum Anschluss an die Ladestation auf, in welchem eine von der Ladestation auslesbare Codierung vorgesehen ist, die technische Daten des aufzuladenden Akkus bereit hält.

Die Ladestation der EP 2 583 859 A2 ist mit einer regelbaren Einrichtung zur Bereitstellung unterschiedlicher Stromstärken und unterschiedlicher Niedervoltspannungen im Bereich unter 50 Volt ausgestattet, so dass die jeweils benötigte Ladespannung der unterschiedlichen Akkus an der entsprechenden Anschlussbuchse der Ladestation abgegeben werden kann.

Der große Vorteil des bekannten Ladesystems besteht darin, dass es für unterschiedliche Modelle von Elektrofahrrädern - mit unterschiedlichsten Akkusystemen - offen ist. Das System ist auch jederzeit erweiterbar, da ein neues Akku-Modell durch ein entsprechend codiertes Ladekabel in das System integrierbar ist.

Das bisherige System ist allerdings nur unzureichend gegen Vandalismus und Diebstahl der Fahrräder insbesondere während des Ladevorgangs abgesichert.

Aus der DE 10 2015 002 486 A1 ein Ladekabel für ein Elektrofahrzeug bekannt geworden, das mit einem Ladestecker verriegelbar an einer Ladestation angeschlossen werden kann, wobei ein Hebel in eine Hinterschneidung am Ladestecker eingreift. Weiters kann auch der Akkustecker des Ladekabels in der Akkusteckdose verriegelt werden, wobei im oder am Akku eine entsprechende Verriegelungsvorrichtung vorgesehen ist, mit welcher der Akkustecker während des Ladevorgangs sperrbar ist. Nachteilig dabei ist, dass das System nur für spezielle Akkus mit der beschriebenen Verriegelungsvorrichtung verwendbar ist, sodass insbesondere bei Ladestationen im öffentlichen Raum alle anderen Nutzer, deren E-Bike keinen derartigen Verriegelungsmechanismus am Akku vorsieht, von den Vorteilen derartiger Sicherungssysteme ausgeschlossen sind.

Aus der DE 10 2012 025 083 A1 ist eine kapazitive Ladeeinrichtung für ein batteriebetriebenes Elektrofahrrad im öffentlichen Raum bekannt, deren ringförmiges Fahrradschloss an einer Halteöse der Ladeeinrichtung befestigt ist. Die Gliederkette des Fahrradschlosses weist ein Verschlussteil auf, an welches ein Ladekabel angebracht ist. Mit Hilfe des Fahrradschlosses lässt sich das Elektrofahrrad zwar an der Halteöse der Ladeeinheit lösbar befestigen, für eine Sicherung des Fahrzeugs abseits der Ladestation müssen jedoch zusätzliche Absperrvorrichtungen mitgeführt werden.

Schließlich ist aus der DE 10 2014 116 600 A1 ein Sicherheitsschloss für ein Elektrofahrrad bekannt, welches ein induktives Ladesystem für den Akku des Fahrrades aufweist. Das Ladekabel ist als Sperrkette ausgeführt, mit welcher das Elektrofahrrad während des induktiven Ladevorgangs an der Ladestation fixiert werden kann. Dazu wird ein Steckergehäuse am Ende der Sperrkette in einer Aufnahme der Ladestation verriegelt, wobei zur induktiven Übertragung elektrischer Energie entsprechende Primär- und Sekundärwicklungen in der Aufnahme der Ladestation bzw. im Steckergehäuse vorgesehen sind. Mit der bekannten Absperrvorrichtung ist allerdings keine Sicherung des Elektrofahrzeugs außerhalb der Ladestation möglich, es müsste somit zusätzlich ein Sperrseil bzw. eine Sperrkette am Fahrrad mitgeführt werden, um dieses beispielsweise an einem Radständer, Laternenpfahl etc. zu befestigen.

Aufgabe der Erfindung ist es, eine einfach mitzuführende Lade- und Absperrvorrichtung für Elektrofahrzeuge, vorzugsweise Elektrofahrräder, vorzuschlagen, die die genannten Nachteile vermeidet und für möglichst viele Nutzer unterschiedlichster Elektrofahrzeuge auch außerhalb der Ladestation verwendbar ist, ohne Änderungen an den Elektrofahrzeugen und deren Akkus vornehmen zu müssen, oder bestimmte technische oder bauliche Vorgaben zu fordern.

Erfindungsgemäß wird dies dadurch erreicht, dass die Lade- und Absperrvorrichtung ein am Rahmen des Elektrofahrzeugs befestigbares Rahmenschloss oder ein am Ladesperrseil angeordnetes Seilschloss aufweist, die mit einer Aufnahme samt einer Sperreinrichtung für das Verriegelungselement des Verriegelungs-Ladungssteckers ausgestattet sind.

Die Vorteile der Erfindung liegen insbesondere darin, dass die Ladefunktion und die Absperrfunktion des Ladekabels weitgehend entkoppelt sind, dahingehend, dass der Akkustecker keinen Verriegelungsmechanismus benötigt und daher das erfindungsgemäße Ladekabel mit unterschiedlichen, auf die jeweiligen Akkus abgestimmten Akkusteckern ausgestatten sein kann.

Die Erfindung führt zu einer kompakten, leicht mitzuführenden Lade- und Absperrvorrichtung für Elektrofahrzeuge, die universell verwendbar ist und zwar sowohl an einer Ladestation, wo der Verriegelungs-Ladestecker absperrbar an der Ladestation befestigbar ist, als auch abseits der Ladestation, wobei der Verriegelungs-Ladestecker mit seinem Verriegelungselement in alternativen Ausführungen in einer entsprechenden Aufnahme am Elektrofahrzeug oder in einer Aufnahme des Ladesperrseils fixierbar ist.

Gemäß einer Weiterbildung der Erfindung weist der Verriegelungs-Ladungsstecker eine von der Ladestation auslesbare Codierung, beispielsweise einen elektronischen Datenträger auf (z.B. EPROM), der technische Daten des aufzuladenden Akkus bereithält. Die erfindungsgemäße Vorrichtung ist daher genau so flexibel einsetzbar, wie das eingangs im Zusammenhang mit der EP 2 583 859 A2 beschriebene Ladesystem ohne Absperrfunktion.

Unterschiedliche Elektrofahrräder können somit auch abseits von Ladestationen ohne zusätzliche Sicherungsmittel vor Diebstahl gesichert werden, indem man das Ladesperrseil mit Hilfe der Fixierungsschlaufe an einem ortsfesten Gegenstand, wie beispielsweise einem Baum oder einem Laternenpfahl, befestigt und den Verriegelung-Ladestecker im Rahmenschloss, beispielsweise einem Sattelrohrschloss oder einem in die Radspeichen eingreifenden Bügelschloss, absperrt.

Die Erfindung wird im Folgenden anhand von Ausführungsbeispielen näher erläutert. Es zeigen:
- Fig. 1: eine teilweise schematische Übersichtsdarstellung einer erfindungsgemäßen Lade- und Absperrvorrichtung an einem Elektrofahrrad;
- Fig. 2: das Ladekabel der Lade- und Absperrvorrichtung gemäß Fig. 1;
- Fig. 3: ein Detail des Ladekabels gemäß Fig. 2 samt einer ersten Variante eines Rahmenschlosses;
- Fig. 4: ein Detail des Ladekabels gemäß Fig. 2 samt einer zweiten Variante eines Rahmenschlosses; sowie
- Fig. 5: eine Ausführungsvariante des Ladekabels gemäß der Alternative der Erfindung mit einem Seilschloss.

Funktionsgleiche Teile sind in den Ausführungsvarianten mit gleichen Bezugszeichen versehen.

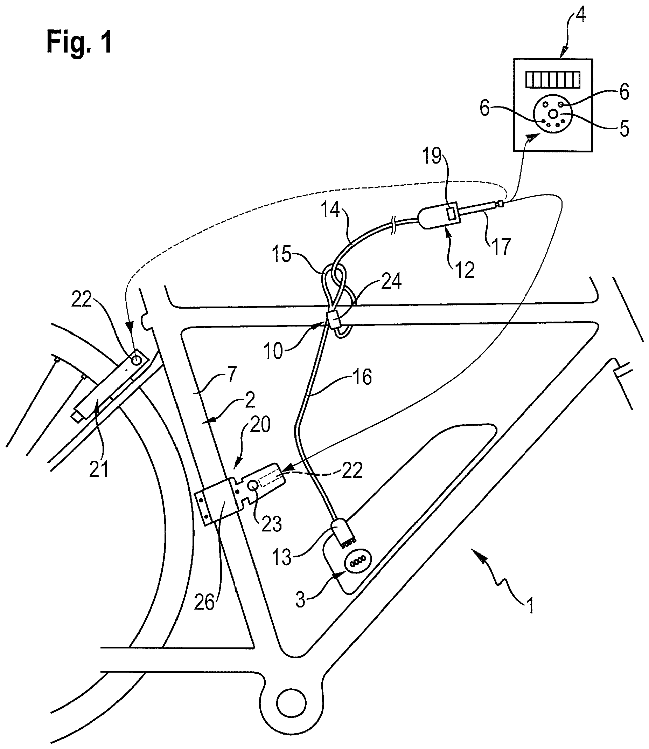

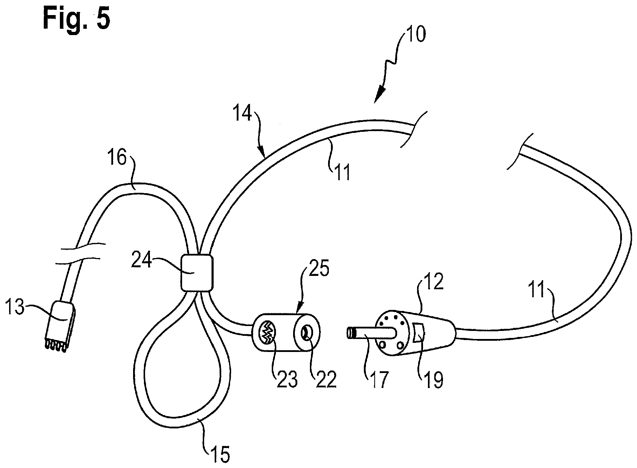

Die in Fig. 1 dargestellte Lade- und Absperrvorrichtung für alle herkömmlichen, handelsüblichen Elektrofahrräder 1, mit einem Rahmen 2 und einem am Rahmen 2 angeordneten Akku 3, weist ein Ladekabel 10 zum Aufladen des Akkus 3 an einer Ladestation 4 auf, wobei das Ladekabel 10 einen an einer Ladebuchse 5 der Ladestation 4 absperrbar ansteckbaren Verriegelungs-Ladestecker 12 und einen mit dem jeweiligen Akku 3 elektrisch verbindbaren Akkustecker 13 aufweist. Ein mit einem Sicherungselement 11, beispielsweise einem Seil, einem Metallgewebeschlauch oder einer Kette, verstärkter Abschnitt des Ladekabels 10 ist als Ladesperrseil 14 ausgeführt, das an einem Ende den Verriegelungs-Ladestecker 12 und am anderen Ende zumindest ein Fixierungselement, beispielsweise in Form eines Fixierungsringes oder einer Fixierungsschlaufe 15 (oder eines Seilschlosses 25 gemäß Fig. 5) aufweist, mit deren Hilfe das Ladesperrseil 14 beispielsweise am Rahmen 2 des Elektrofahrzeugs 1 (wie in Fig. 1 dargestellt) oder an einem fixen Gegenstand, wie einem Baum oder Laternenpfahl, festlegbar ist. Aus dem Ladesperrseil 14, bevorzugt im Bereich der Befestigungsstelle 24 des Fixierungselementes 15, ist ein flexibler Ladekabelabschnitt 16 herausgeführt, der zum Ackustecker 13 führt. Das Ladekabel 10 ist mit dem jeweils passenden Akkustecker 13 bestückt. Damit wird sichergestellt, dass für jeden Akkutyp ein spezielles Ladekabel bereitgestellt werden kann, so dass alle am Markt befindlichen Elektrofahrzeuge aufgeladen und gesichert werden können.

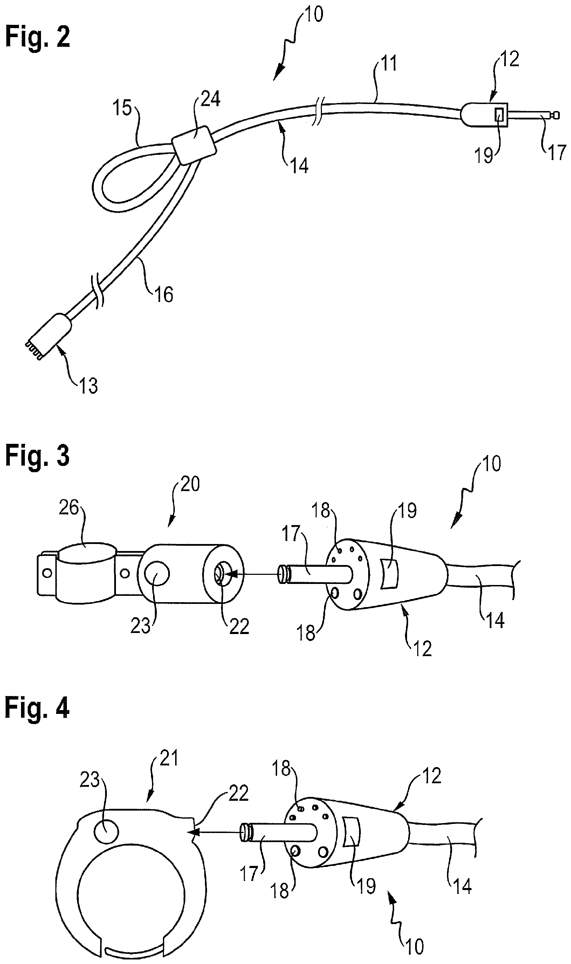

Wie insbesondere in den Fig. 3 und Fig. 4 erkennbar ist, weist der Verriegelungs-Ladestecker 12 ein Verriegelungselement 17 auf, beispielsweise einen Verriegelungsdorn mit einer Ringnut, sowie elektrische Kontaktelemente 18, beispielsweise Kontaktbuchsen, die zur Energie- und Signalübertragung zwischen Ladestation 4 und Akku 3 dienen. Die Ladebuchse 5 der Ladestation 4 ist zu diesem Zweck mit Kontaktstiften 6 ausgestattet, sowie mit einer hier nicht weiter dargestellten Sperreinrichtung zur Festlegung des Verriegelungselements 17 in der Ladebuchse 5.

Alternativ kann der Verriegelungs-Ladungsstecker 12 neben dem Verriegelungselement 17 auch eine Empfänger-Induktionsspule aufweisen, die zur induktiven Aufladung des Akkus 3 mit einer Sendespule der Ladestation 4 zusammenwirkt.

Alle Sperreinrichtungen zur Festlegung und Freigabe des Verriegelungselements 17 des Verriegelungs-Ladesteckers 12 können mechanisch oder elektromechanisch betätigbar sein.

Der Verriegelungs-Ladungsstecker 12 weist eine von der Ladestation 4 auslesbare Codierung, beispielsweise einen elektronischen Datenträger 19 auf, die bzw. der technische Daten des aufzuladenden Akkus 3 bereit hält.

Der Verriegelungs-Ladungsstecker 12 kann weiters auch einen auf Berührung oder Erschütterung reagierenden Sensor aufweisen, der ein akustisches Signal, ein optisches Signal oder ein Funksignal auslöst und den Besitzer des Elektrofahrzeugs bei Vandalismus oder Diebstahl benachrichtigt oder warnt. Beispielsweise kann das Funksignal eine Live-Stream Kamera an der Ladestation 4 starten, die den Vorgang am Smartphone des Besitzers des angeschlossenen Elektrofahrzeugs erscheinen lässt.

Gemäß einer Ausführungsvariante kann das Fixierungselement als Seilschlaufe 15 ausgeführt sein, an deren Befestigungsstelle 24 am Ladesperrseil 14 der zum Akkustecker 13 führende Ladekabelabschnitt 16 herausgeführt ist (siehe Fig. 2).

Gemäß einer einer Alternative der Erfindung und anstelle eines Rahmenschlosses weist das Ladesperrseil 14 als Fixierungselement ein Seilschloss 25 auf, das mit einer Aufnahme 22 für ein Verriegelungselement 17 des Verriegelungs-Ladungssteckers 12 und einer Sperreinrichtung 23 ausgestattet ist. Die Sperreinrichtung kann sowohl mechanisch als auch elektronisch ausgeführt sein. Die Lade- und Absperrvorrichtung kann dadurch unabhängig von einer Ladestation, überall auch als herkömmliches Seil- oder Kettenschloss verwendet werden (siehe Fig. 5).

Die Lade- und Absperrvorrichtung kann weiters ein am Rahmen 2 des Elektrofahrzeugs 1, beispielsweise am Sattelrohr 7 eines Fahrrads, mittels Befestigungsmittel 26 befestigbares Rahmenschloss 20 (Sattelrohrschloss) aufweisen, das mit einer Aufnahme 22 für das Verriegelungselement 17 des Verriegelungs-Ladungssteckers 12 und einer Sperreinrichtung 23 ausgestattet ist.

Alternativ oder zusätzlich dazu kann ein Rahmenschloss als Bügelschloss 21 ausgeführt sein, das in Sperrstellung in die Radspeichen des Elektrofahrzeugs 1 eingreift und ebenfalls eine absperrbare Aufnahme 22 für das Verriegelungselement 17 des Verriegelungs-Ladungssteckers 12 aufweist.

## Patentansprüche

1. Lade- und Absperrvorrichtung geeignet für Elektrofahrzeuge (1), vorzugsweise Elektrofahrräder, mit einem Rahmen (2) und einem am oder im Rahmen (2) angeordneten Akku (3), mit einem Ladekabel (10) zum Aufladen des Akkus (3) an einer Ladestation (4), wobei das Ladekabel (10) zumindest teilweise mit einem Sicherungselement (11), verstärkt ist, einen an einer Ladebuchse (5) der Ladestation (4) mittels eines Verriegelungselements (17) absperrbar ansteckbaren Verriegelungs-Ladestecker (12) und einen mit dem Akku (3) elektrisch verbindbaren Akkustecker (13) aufweist, wobei ein mit dem Sicherungselement (11) verstärkter Abschnitt des Ladekabels (10) als Ladesperrseil (14) ausgeführt ist, das an einem Ende den Verriegelungs-Ladestecker (12) und am anderen Ende zumindest ein Fixierungselement, in Form eines Fixierungsringes oder einer Fixierungsschlaufe (15) aufweist, mit deren oder dessen Hilfe das Ladesperrseil (14) am Rahmen (2) des Elektrofahrzeugs (1) festlegbar ist, wobei aus dem Ladesperrseil (14) ein Ladekabelabschnitt (16) herausgeführt ist, der zum Akkustecker (13) führt, **dadurch gekennzeichnet, dass** die Lade- und Absperrvorrichtung ein am Rahmen (2) des Elektrofahrzeugs (1) befestigbares Rahmenschloss (20, 21) oder ein am Ladesperrseil (14) angeordnetes Seilschloss (25) aufweist, die mit einer Aufnahme (22) samt einer Sperreinrichtung (23) für das Verriegelungselement (17) des Verriegelungs-Ladungssteckers (12) ausgestattet sind.

2. Lade- und Absperrvorrichtung nach Anspruch 1, **dadurch gekennzeichnet, dass** der Verriegelungs-Ladungsstecker (12) elektrische Kontaktelemente (18), beispielsweise Kontaktbuchsen, geeignet für die Energie- und Signalübertragung zwischen Ladestation (4) und Akku (3) aufweist.

3. Lade- und Absperrvorrichtung nach Anspruch 1, **dadurch gekennzeichnet, dass** der Verriegelungs-Ladungsstecker (12) eine Empfänger-Induktionsspule aufweist, die geeignet ist zur induktiven Aufladung des Akkus (3) mit einer Sendespule der Ladestation (4) zusammenzuwirken.

4. Lade- und Absperrvorrichtung nach Anspruch 1 oder 3, **dadurch gekennzeichnet, dass** der Verriegelungs-Ladungsstecker (12) eine von der Ladestation (4) auslesbare Codierung, beispielsweise einen elektronischen Datenträger (19), z.B. EPROM, aufweist, die bzw. der technische Daten des aufzuladenden Akkus (3) bereit hält.

5. Lade- und Absperrvorrichtung nach einem der Ansprüche 1 bis 4, **dadurch gekennzeichnet, dass** der Verriegelungs-Ladungsstecker (12) einen auf Berührung oder Erschütterung reagierenden Sensor aufweist, der ein akustisches Signal, ein optisches Signal oder ein Funksignal auslöst.

6. Lade- und Absperrvorrichtung nach einem der Ansprüche 1 bis 5, **dadurch gekennzeichnet, dass** das Fixierungselement als Seilschlaufe (15) ausgeführt ist, an deren Befestigungsstelle (24) am Ladesperrseil (14) der zum Akkustecker (13) führende Ladekabelabschnitt (16) herausgeführt ist.

7. Lade- und Absperrvorrichtung nach Anspruch 1, beschränkt auf die Alternative mit einem Rahmenschloss, **dadurch gekennzeichnet, dass** das Rahmenschloss als Sattelrohrschloss (20) ausgeführt ist und Befestigungsmittel (26) zur Festlegung am Sattelrohr (7) aufweist.

8. Lade- und Absperrvorrichtung nach Anspruch 1, beschränkt auf die Alternative mit einem Rahmenschloss, **dadurch gekennzeichnet, dass** das Rahmenschloss als Bügelschloss (21) ausgeführt ist, das in Sperrstellung in die Radspeichen des Elektrofahrzeugs (1) eingreift.

9. Lade- und Absperrvorrichtung nach einem der Ansprüche 1 bis 8, **dadurch gekennzeichnet, dass** das Sicherungselement (11) ein Seil, ein Metallgewebeschlauch oder eine Kette ist,

## Claims

1. Charging and locking device suitable for electric vehicles (1), preferably electric bicycles, having a frame (2) and a battery (3) arranged on or in the frame (2), having a charging cable (10) for charging the battery (3) at a charging station (4), wherein the charging cable (10) is at least partially reinforced with a securing element (11) and comprises a locking charging plug (12) which can be plugged in a lockable manner onto a charging socket (5) of the charging station (4) by means of a locking element (17) and a battery plug (13) which can be electrically connected to the battery (3), wherein a section of the charging cable (10) which is reinforced with the securing element (11) is designed as a locking charging cable (14) which has at one end the locking charging plug (12) and at the other end at least one fixing element, in the form of a fixing ring or a fixing loop (15), with the aid of which the charging locking cable (14) can be fixed to the frame (2) of the electric vehicle (1), wherein a charging cable section (16) is led out of the charging locking cable (14), which leads to the battery plug (13), **characterised in that** the charging and locking device has a frame lock (20, 21) which can be fastened to the frame (2) of the electric vehicle (1) or a cable lock (25) which is arranged on the charging locking cable (14), which are both equipped with a receptacle (22) together with a blocking device (23) for the locking element (17) of the locking charging plug (12).

2. Charging and locking device according to claim 1, **characterised in that** the locking charging plug (12) has electrical contact elements (18), for example contact sockets, suitable for power and signal transmission between charging station (4) and battery (3).

3. Charging and locking device according to claim 1, **characterised in that** the locking charging plug (12) comprises a receiver induction coil suitable to cooperate with a transmitter coil of the charging station (4) for inductive charging of the battery (3).

4. Charging and locking device according to claim 1 or 3, **characterised in that** the locking charging plug (12) has a coding which can be read by the charging station (4), for example an electronic data carrier (19), e.g. EPROM, which holds technical data of the battery (3) to be charged.

5. Charging and locking device according to one of claims 1 to 4, **characterised in that** the locking charging plug (12) has a sensor which reacts to touch or vibration and triggers an acoustic signal, an optical signal or a radio signal.

6. Charging and locking device according to one of the claims 1 to 5, **characterised in that** the fixing element is designed as a cable loop (15), at the fastening point (24) of which on the locking charging cable (14) the charging cable section (16) leading to the battery plug (13) is led out.

7. Charging and locking device according to claim 1, limited to the alternative with a frame lock, **characterised in that** the frame lock is designed as a saddle tube lock (20) and comprises fastening means (26) for fixing to the saddle tube (7).

8. Charging and locking device according to claim 1, limited to the alternative with a frame lock, **characterised in that** the frame lock is designed as a U-lock (21) which engages in the wheel spokes of the electric vehicle (1) in the locked position.

9. Charging and locking device according to one of claims 1 to 8, **characterised in that** the securing element (11) is a rope, a metal mesh hose or a chain.

## Revendications

1. Dispositif de charge et de verrouillage destiné à des véhicules électriques (1), de préférence des vélos électriques avec un cadre (2) et un accumulateur (3) installé sur ou dans le cadre (2), un câble de charge (10) pour charger l'accumulateur (3) à partir d'un poste de charge (4), le câble de charge (10) étant renforcé au moins partiellement par un élément de sécurité (11), un connecteur de charge de verrouillage (12) qui se connecte de façon verrouillée à une prise de charge (5) du poste de charge (4) par un élément de verrouillage (17) ainsi qu'un connecteur d'accumulateur (13) relié électriquement à l'accumulateur (3),
- un segment du câble de charge (10) renforcé par l'élément de sécurité (11) étant réalisé comme câble de verrouillage de charge (14) comportant à une extrémité le connecteur de charge et de verrouillage (12) et à l'autre extrémité au moins un élément de fixation sous la forme d'un anneau de fixation ou d'une boucle de fixation (15), à l'aide du ou desquels le câble de verrouillage de blocage (14) se fixe au cadre (2) du véhicule électrique (1),
- un segment de câble de charge (16) sortant du câble de verrouillage de charge (14) pour être relié au connecteur d'accumulateur (13), dispositif de charge et de verrouillage **caractérisé en ce qu'**il comporte une serrure de cadre (20, 21) qui peut se fixer au cadre (2) du véhicule électrique (1) ou une serrure de câble (25) prévue sur le câble de verrouillage de charge (14), et qui est munie d'un récepteur (22) avec une installation de blocage (23) pour l'élément de verrouillage (17) du connecteur de verrouillage et de charge (12).

2. Dispositif de charge et de verrouillage selon la revendication 1, **caractérisé en ce que**
le connecteur de verrouillage et de charge (12) comporte des éléments de contact électrique (18), par exemple, des douilles de contact permettant la transmission d'énergie et de signaux entre le poste de charge (4) et l'accumulateur (3).

3. Dispositif de charge et de verrouillage selon la revendication 1, **caractérisé en ce que**
le connecteur de verrouillage et de charge (12) comporte une bobine d'induction de réception qui permet de charger par induction de l'accumulateur (3) en coopérant avec une bobine d'émission du poste de charge (4).

4. Dispositif de charge et de verrouillage selon la revendication 1 ou 3, **caractérisé en ce que**
le connecteur de verrouillage et de charge (12) comporte un codage lisible par le poste de charge (4), par exemple, un support de données électroniques (19) tel que, par exemple, une mémoire EPROM qui maintient la ou les données techniques disponibles de l'accumulateur (3) à charger.

5. Dispositif de verrouillage selon l'une des revendications 1 à 4, **caractérisé en ce que**
le connecteur de verrouillage et de charge (12) comporte un capteur réagissant au contact ou aux secousses qui déclenchent un signal acoustique, un signal optique ou un signal radio.

6. Dispositif de charge et de verrouillage selon l'une des revendications 1 à 5,
**caractérisé en ce que**
l'élément de fixation forme une boucle de câble (15) dont le point de fixation (24) du câble de verrouillage de charge (14) est sur le segment du câble de charge (16) allant vers le connecteur d'accumulateur (13).

7. Dispositif de charge et de verrouillage selon la revendication 1, limité à l'alternative avec une serrure de cadre,
**caractérisé en ce que**
la serrure de cadre est une serrure de tube de selle (20) et comporte un moyen de fixation (26) pour être fixée au tube de selle (7).

8. Dispositif de charge et de verrouillage selon la revendication 1, limité à l'alternative avec une serrure de cadre,
**caractérisé en ce que**
la serrure de cadre est une serrure à arceau (21) qui, en position de verrouillage, vient dans les rayons de roue du véhicule électrique (1).

9. Dispositif de charge et de verrouillage selon l'une des revendications 1 à 8,
**caractérisé en ce que**
l'élément de sécurité (11) est un câble, un tube en tissus métallique ou une chaîne.
